# EUROPÄISCHE PATENTSCHRIFT

(11) **EP 2 334 925 B1**
(45) Veröffentlichungstag und Bekanntmachung des Hinweises auf die Patenterteilung: **29.11.2017**
(21) Anmeldenummer: 09782125.0
(22) Anmeldetag: 24.08.2009
(51) Int. Cl.: F03B 3/04, F03B 13/08, F03B 11/02

(54) **WASSERKRAFTANLAGE**
HYDROPOWER PLANT
INSTALLATION DE FORCE MOTRICE HYDRAULIQUE

(30) Priorität: 03.09.2008 DE 102008045500
(43) Veröffentlichungstag der Anmeldung: 22.06.2011
(73) Patentinhaber: Wobben Properties GmbH, 26607 Aurich (DE)
(72) Erfinder: ROHDEN, Rolf, 26607 Aurich (DE)
(74) Vertreter: Eisenführ Speiser
(86) Internationale Anmeldenummer: PCT/EP2009/060888
(87) Internationale Veröffentlichungsnummer: WO 2010/026072

(56) Entgegenhaltungen:
- JP-A- 60 067 781
- US-A- 4 319 142
- US-A- 4 573 827
- US-B1- 6 267 551

## Beschreibung

Die vorliegende Erfindung betrifft eine Wasserkraftanlage.

Es sind verschiedene Wasserkraftanlagen bekannt.

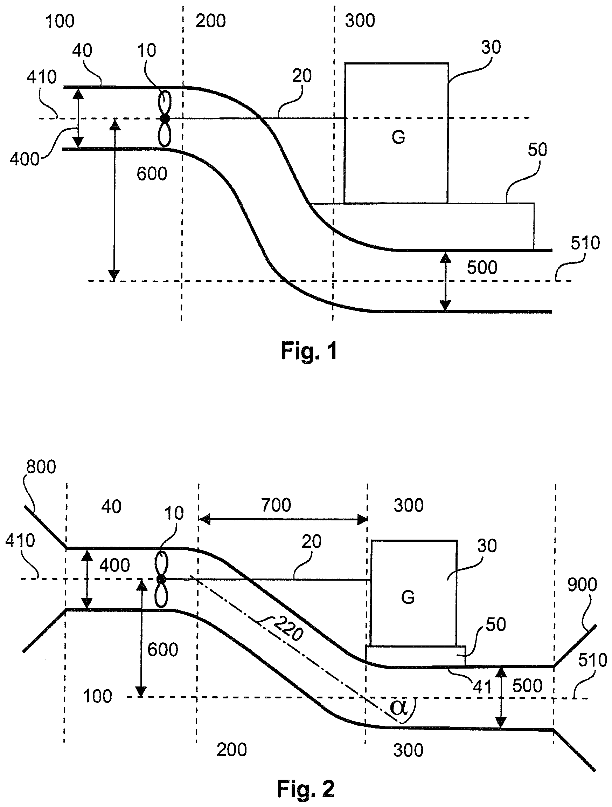

Ein Beispiel einer bekannten Wasserkraftanlage mit einer S-Rohr Geometrie ist in Fig. 1 gezeigt. Hierbei kann ein Strömungskanal 40 S-förmig mit einem ersten, zweiten und dritten Abschnitt 100, 200, 300 ausgestaltet sein. Dabei kann der erste und dritte Abschnitt 100, 300 im Wesentlichen gerade ausgestaltet sein, und der erste und zweite Abschnitt sind beabstandet zueinander angeordnet. Der zweite Abschnitt 200 dient dazu, den ersten mit dem dritten Abschnitt 100, 300 zu verbinden. Im Bereich des ersten Abschnitts kann das Laufrad mit den Turbinenschaufeln 10 vorgesehen sein. Über eine Welle 20 können die Turbinenschaufeln 10 mit einem Generator 30 gekoppelt sein. Durch den Wasserstrom, welcher durch den Strömungskanal 40 fließt, werden die Turbinenschaufeln 10 angetrieben, und diese Rotationsbewegung wird in dem Generator 30 in elektrische Energie umgewandelt. Der Generator 30 ist üblicherweise auf einem Fundament 50 aus Beton angeordnet.

Als Stand der Technik wird auf die FR 2 550 826, die US 4,319,142, die als nächstliegender Stand der Technik angesehen wird, US 1,859,215 und JP 60-008474 A verwiesen.

Es ist eine Aufgabe der vorliegenden Erfindung, eine Wasserkraftanlage mit einem verbesserten Wirkungsgrad vorzusehen.

Diese Aufgabe wird durch eine Wasserkraftanlage gemäß Anspruch 1 gelöst.

Somit wird eine Wasserkraftanlage mit einem als S-Rohr ausgestalteten Strömungskanal mit einem ersten, zweiten und dritten Abschnitt vorgesehen. Der Strömungskanal weist im ersten Abschnitt einen ersten Durchmesser und eine erste Mittellinie und im dritten Abschnitt einen zweiten Durchmesser und eine zweite Mittellinie auf. Zwischen der ersten und zweiten Mittellinie ist ein Abstand vorgesehen. Die Wasserkraftanlage weist ferner Turbinenschaufeln im ersten Abschnitt und einen mit den Turbinenschaufeln durch eine Welle gekoppelten Generator im dritten Abschnitt auf. Der Strömungskanal weist im Bereich des Generators im Wesentlichen Stahl auf.

Gemäß einem Aspekt der vorliegenden Erfindung ist das Verhältnis zwischen einer Länge des zweiten Abschnitts zu dem Abstand zwischen der ersten und zweiten Mittellinie 2 bis 4 und vorzugsweise 3.

Gemäß einem weiteren Aspekt der vorliegenden Erfindung ist ein Fundament für den Generator im Bereich eines Dachs des Strömungskanals im dritten Abschnitt vorgesehen. Das Dach kann beispielsweise als eine Stahlkonstruktion ausgestaltet sein.

Gemäß einem weiteren Aspekt der vorliegenden Erfindung ist das Fundament derart ausgestaltet, dass es die hydro-dynamischen Lasten in dem Strömungskanal im dritten Abschnitt abtragen kann.

Gemäß einem weiteren Aspekt der vorliegenden Erfindung ist eine erste und zweite Aufweitung am ersten oder dritten Abschnitt vorgesehen.

Die Erfindung beruht auf der Erkenntnis, dass typischerweise lediglich die Situation vor und hinter den Laufradschaufeln betrachtet wird. Hierbei kann es vorkommen, dass im Strömungskanal sowie im Saugrohr entstehende Verluste vernachlässigt werden. Insbesondere die Ausgestaltung des dritten Abschnitts sollte derart erfolgen, dass die im Saugrohr auftretenden hydro-dynamischen Lasten abgetragen werden. Dazu muss die Decke des Strömungskanals im dritten Abschnitt entsprechend ausgestaltet sein. Die Ausgestaltung der Decke des Strömungskanals im dritten Abschnitt beeinfiusst jedoch auch die Steigung im Saugrohr bzw. im zweiten Abschnitt des Strömungskanals. Durch eine verbesserte Ausgestaltung der Decke des Strömungskanals im dritten Abschnitt kann die benötigte Steigung in dem zweiten Abschnitt reduziert werden. Dies kann insbesondere durch Verwendung von Stahl zum Abtrag der hydro-dynamischen Lasten erfolgen. Somit kann eine geringere Steigung, größere Krümmungsradien und günstigere Strömungseigenschaften in dem Strömungskanal 40 erreicht werden.

Weitere Ausgestaltungen der Erfindung sind Gegenstand der Unteransprüche.

Ausführungsbeispiele und Vorteile der Erfindung werden nachstehend unter Bezugnahme auf die Zeichnung näher erläutert.
- Fig. 1: zeigt eine schematische Darstellung einer Wasserkraftanlage gemäß dem Stand der Technik,
- Fig. 2: zeigt eine schematische Darstellung einer Wasserkraftanlage gemäß einem ersten Ausführungsbeispiel,
- Fig. 3: zeigt eine schematische Draufsicht auf eine Wasserkraftanlage gemäß einem zweiten Ausführungsbeispiel, und
- Fig. 4: zeigt eine schematische Darstellung einer Wasserkraftanlage gemäß dem zweiten Ausführungsbeispiel.

Fig. 2 zeigt eine schematische Darstellung einer Wasserkraftanlage gemäß einem ersten Ausführungsbeispiel. Die Wasserkraftanlage weist einen ersten, zweiten und dritten Abschnitt 100, 200, 300 auf. Ein Strömungskanal 40 ist im Wesentlichen als ein S-Rohr ausgestaltet und erstreckt sich durch den ersten, zweiten und dritten Abschnitt 100, 200, 300. In dem ersten Abschnitt 100 ist der Strömungskanal 40 im Wesentlichen gerade ausgestaltet und weist einen ersten Durchmesser 400 und eine erste Mittellinie 410 auf. Im dritten Abschnitt 300 ist der Strömungskanal ebenfalls im Wesentlichen gerade ausgestaltet und weist einen zweiten Durchmesser 500 und eine zweite Mittellinie 510 auf. Der zweite Abschnitt 200 verbindet den ersten mit dem dritten Abschnitt 100, 300. Die erste und zweite Mittellinie 410, 510 sind um einen ersten Abstand 600 zueinander beabstandet angeordnet.

Im Bereich des ersten Abschnittes 100 ist das Laufrad mit den Turbinenschaufeln 10 vorgesehen. Ein Generator 30 ist im Bereich des dritten Abstandes 300 auf einem Fundament 50 angeordnet. Das Laufrad 10 wird über eine Welle 20 mit dem Generator 30 verbunden.

Optional können am ersten und/oder dritten Abschnitt 100, 300 eine erste oder zweite Aufweitung 800, 900 des Strömungskanals vorgesehen sein. Der zweite Abschnitt 200 kann eine Mittellinie 220 aufweisen. Die Mittellinie 220 kann eine Steigung von *α* aufweisen. *α* kann zwischen 10° und 30°, insbesondere zwischen 18° und 22° liegen. *α* kann vorzugsweise 21° betragen.

In dem ersten Abschnitt 100 ist der Druckbereich und in dem Abschnitt hinter dem Laufrad 10 ist der Saugbereich des Strömungskanals vorgesehen.

Der erste, zweite und dritte Bereich 100, 200, 300 ist hierbei insbesondere derart ausgestaltet, dass die Strömung sich nicht von der Kanalwand löst. Durch die Ausgestaltung des Strömungskanals 40 gemäß dem ersten Ausführungsbeispiel kann der zweite Abschnitt 200 länger ausgestaltet sein als im Stand der Technik.

Das Dach 41 des Strömungskanals 40 im dritten Abschnitt ist derart ausgestaltet, dass es die auftretenden hydro-dynamischen Lasten aufnehmen kann. Das Dach 41 kann beispielsweise Stahl zum Abtrag der hydro-dynamischen Lasten aufweisen. Das Dach 41 bzw. der Abschnitt des Strömungskanals 40 im Bereich unterhalb des Generators 30 weist optional Stahl und insbesondere Edelstahl auf. Edelstahl wird insbesondere für die wasserberührende Oberfläche verwendet. Somit kann der Strömungskanal 40 im Wesentlichen aus Beton ausgestaltet werden, wobei der Bereich unterhalb des Generators 30 aus (Edel)Stahl vorgesehen wird.

Der Generator 30 kann gemäß dem ersten Ausführungsbeispiel auf Stahlschienen oder Strahlträgern als Fundament 50 angeordnet sein, das mit dem Dach 41 kombiniert werden kann. Diese Stahlträger dienen dazu, die hydro-dynamischen Lasten des Strömungskanals aufzunehmen.

Der Generator 30 kann vorzugsweise ohne Getriebe mit der Welle 20 bzw. den Laufradschaufeln gekoppelt sein. Somit können weniger Verluste im Triebstrang und schnell drehende Bauteile vermieden werden. Dies ist insbesondere vorteilhaft, weil ein geringerer Wartungsaufwand und ein geringerer Einsatz von ölhaltigen Betriebsstoffen erforderlich ist. Das Laufrad 10 kann vorzugsweise als Luvläufer ausgestaltet sein, was optimale Anströmbedingungen ermöglicht. Das Leitrad kann als Tragkonstruktion ausgestaltet werden, so dass eine minimale Anzahl von Einbauten im Triebwasserkanal benötigt wird. Durch die Ausgestaltung der Wasserkraftanlage und insbesondere durch die Ausgestaltung des Strömungskanals 40 können kleine Umlenkradien vermieden werden, so dass minimale Fallhöhenverluste an der Turbine entstehen.

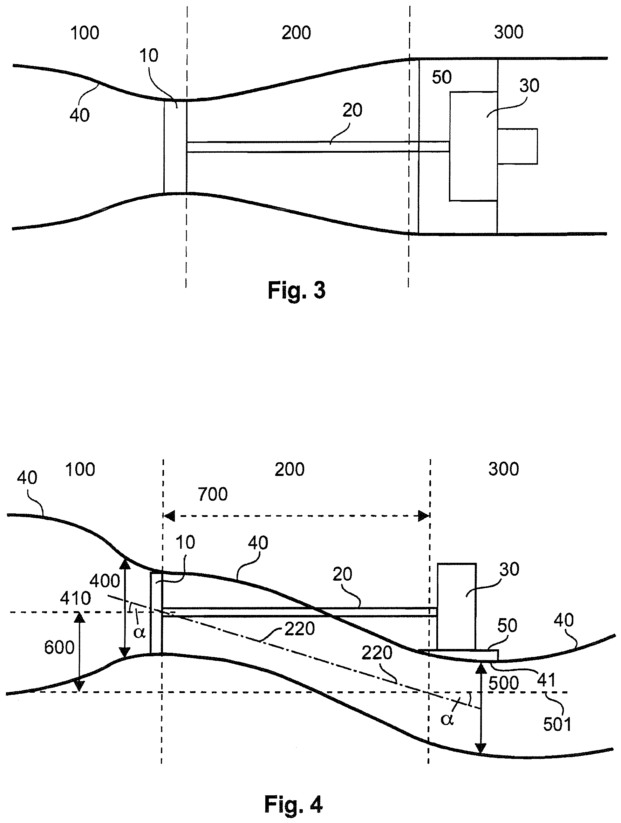

Fig. 3 zeigt eine Draufsicht auf eine Wasserkraftanlage gemäß einem zweiten Ausführungsbeispiel. Die Wasserkraftanlage weist einen ersten, zweiten und dritten Abschnitt 100, 200, 300 mit einem Strömungskanal 40 auf. Im Strömungskanal 40 sind ferner Turbinenschaufeln 10 und eine damit verbundene Welle vorgesehen. Außerhalb des Strömungsrohres 40 ist ein Generator 30 auf einem Fundament 50 vorgesehen.

Fig. 4 zeigt eine schematische Darstellung einer Wasserkraftanlage gemäß einem zweiten Ausführungsbeispiel. Die Wasserkraftanlage weist einen ersten, zweiten und dritten Abschnitt 100, 200, 300 auf. Ein Strömungskanal 40 ist im Wesentlichen als ein S-Rohr ausgestaltet und erstreckt sich durch den ersten, zweiten und dritten Abschnitt 100, 200, 300. In dem ersten Abschnitt 100 ist der Strömungskanal 40 im Wesentlichen gerade ausgestaltet und weist einen ersten Durchmesser 400 und eine erste Mittellinie 410 auf. Im dritten Abschnitt 300 ist der Strömungskanal ebenfalls im Wesentlichen gerade ausgestaltet und weist einen zweiten Durchmesser 500 und eine zweite Mittellinie 510 auf. Der zweite Abschnitt 200 verbindet den ersten mit dem dritten Abschnitt 100, 300. Die erste und zweite Mittellinie 410, 510 sind um einen ersten Abstand 600 zueinander beabstandet angeordnet.

Im Bereich des ersten Abschnittes 100 ist das Laufrad mit den Turbinenschaufeln 10 vorgesehen. Ein Generator 30 ist im Bereich des dritten Abstandes 300 auf einem Fundament 50 angeordnet. Das Laufrad 10 wird über eine Welle 20 mit dem Generator 30 verbunden.

Optional können am ersten und/oder dritten Abschnitt 100, 300 eine erste oder zweite Aufweitung 800, 900 des Strömungskanals vorgesehen sein. Der zweite Abschnitt 200 kann eine Mittellinie 220 aufweisen. Die Mittellinie 220 kann eine Steigung von *α* aufweisen. *α* kann zwischen 10° und 30°, insbesondere zwischen 18° und 22° liegen. *α* kann vorzugsweise 21° betragen.

Der erste und zweite Durchmesser 400, 500 kann zwischen 4 m und 6 m, vorzugsweise zwischen 4,50 m und 5 m und insbesondere 4,8 m betragen. Die Länge 700 des zweiten Abschnittes 200 kann zwischen 15 m und 21 m betragen, vorzugsweise 18 m. Der Abstand 600 zwischen den beiden Mittellinien 410, 510 kann zwischen 4 m und 8 m, vorzugsweise 6 m betragen.

Das Verhältnis der Länge 700 des zweiten Abschnittes 200 zu dem Abstand zwischen der ersten und zweiten Mittellinie 410, 510 beträgt zwischen 2 und 4, vorzugsweise 3.

Gemäß einem Ausführungsbeispiel der Erfindung kann das Verhältnis zwischen dem ersten und zweiten Durchmesser 400, 500 und der Länge 700 des zweiten Abschnitts 200 0,15 bis 0,35 und insbesondere 0,267 betragen. Gemäß einem weiteren Aspekt der vorliegenden Erfindung kann das Verhältnis des ersten oder zweiten Durchmessers 400, 500 zu dem Winkel *α* zwischen 0,2 und 0,3 und insbesondere 0,229 betragen.

Mit der erfindungsgemäßen Ausgestaltung des S-Rohres bzw. des Strömungskanals kann ein harmonischer Übergang zwischen dem ersten und zweiten sowie zwischen dem zweiten und dritten Abschnitt erreicht werden. Dies ist insbesondere vorteilhaft, da hierdurch Verwirbelungen im Strömungskanal verringert werden können.

## Patentansprüche

1. Wasserkraftanlage, mit
einem als S-Rohr ausgestalteten Strömungskanal (40) mit einem ersten, zweiten und dritten Abschnitt (100, 200, 300),
wobei der Strömungskanal (40) im ersten Abschnitt (100) einen ersten Durchmesser (400) und eine erste Mittellinie (410) und im dritten Abschnitt (300) einen zweiten Durchmesser (500) sowie eine zweite Mittellinie (510) aufweist,
wobei ein Abstand (600) zwischen der ersten und zweiten Mittellinie vorgesehen ist,
Turbinenschaufeln (10) im ersten Abschnitt (100) und einem mit den Turbinenschaufeln (10) durch eine Welle (20) direkt gekoppelten Generator (30) im dritten Abschnitt (300),
wobei der Strömungskanal (40) im Bereich des Generators (30) in dem dritten Abschnitt (300) Stahl aufweist,
**dadurch gekennzeichnet dass** das Verhältnis zwischen einer Länge (700) des zweiten Abschnitts (200) zu dem Abstand (600) zwischen der ersten und zweiten Mittellinie (410, 510) 2 bis 4 beträgt,
wobei ein Fundament (50) für den Generator (30) im Bereich eines Dachs (41) des Strömungskanals (40) im dritten Abschnitt (300) vorgesehen ist und als eine Stahlkonstruktion ausgestaltet ist,
wobei der Strömungskanal (40) im Wesentlichen aus Beton ausgestaltet ist und der Bereich des Generators (30) Stahl aufweist.

2. Wasserkraftanlage nach Anspruch 1, wobei das Verhältnis zwischen der Länge (700) und dem Abstand (600) 3 beträgt.

3. Wasserkraftanlage nach Anspruch 1, wobei das Fundament (50) derart ausgestaltet ist, dass es die hydro-dynamischen Lasten in dem Strömungskanal (40) im dritten Abschnitt (300) abtragen kann.

4. Wasserkraftanlage nach einem der Ansprüche 1 bis 3, mit einer ersten und/oder zweiten Aufweitung (800, 900) am ersten und/oder dritten Abschnitt (100, 300).

## Claims

1. A hydropower plant comprising
a flow passage (40) in the form of an S-pipe and having first, second and third portions (100, 200, 300), wherein the flow passage (40) has a first diameter (400) and a first center line (410) in the first portion and a second diameter (500) and a second center line (510) in the third portion (300), wherein a spacing (600) is provided between the first and second center lines,
turbine blades (10) in the first portion (100) and a generator (30) directly coupled to the turbine blades (10) by a shaft (20) in the third portion (300),
wherein the flow passage (40) comprises steel in the region of the generator (30) in the third portion (300).
**characterized in that** the ratio between a length (700) of the second portion (200) to the spacing (600) between the first and second center lines (410, 510) is between 2 and 4,
wherein a foundation (50) for the generator (30) is provided in the region of a roof (41) of the flow passage (40) in the third portion (300) and is in the form of a steel structure,
wherein the flow passage (40) is made substantially made of concrete and the region of the generator comprises steel.

2. A hydropower plant as set forth in claim 1 wherein the ratio between the length (700) and the spacing (600) is 3.

3. A hydropower plant as set forth in claim 1 wherein the foundation (50) is of such a design configuration that it can carry away the hydrodynamic loads in the flow passage (40) in the third portion (300).

4. A hydropower plant as set forth in one of claims 1 through 3 comprising a first and/or second enlargement (800), 900) at the first and/or third portion (100, 300).

## Revendications

1. Installation de force motrice hydraulique, avec
un canal d'écoulement (40) configuré comme un tube en S avec une première, deuxième et troisième section (100, 200, 300),
dans laquelle le canal d'écoulement (40) présente dans la première section (100) un premier diamètre (400) et une première ligne médiane (410) et dans la troisième section (300) un second diamètre (500) ainsi qu'une seconde ligne médiane (510),
dans laquelle une distance (600) entre les première et seconde lignes médianes est prévue,
des pales de turbine (10) dans la première section (100) et un générateur (30) couplé directement aux pales de turbine (10) par un arbre (20) dans la troisième section (300),
dans laquelle le canal d'écoulement (40) présente de l'acier dans la zone du générateur (30) dans la troisième section (300),
**caractérisée en ce que**
le rapport entre une longueur (700) de la deuxième section (200) et la distance (600) entre les première et seconde lignes médianes (410, 510) est comprise entre 2 et 4,
dans laquelle une fondation (50) pour le générateur (30) est prévue dans la zone d'un toit (41) du canal d'écoulement (40) dans la troisième section (300) et est configurée comme une construction en acier,
dans laquelle le canal d'écoulement (40) est constitué sensiblement de béton et la zone du générateur (30) présente de l'acier.

2. Installation de force motrice hydraulique selon la revendication 1, dans laquelle le rapport entre la longueur (700) et la distance (600) s'élève à 3.

3. Installation de force motrice hydraulique selon la revendication 1, dans laquelle la fondation (50) est configurée de telle manière qu'elle puisse éliminer les charges hydrodynamiques dans le canal d'écoulement (40) dans la troisième section (300).

4. Installation de force motrice hydraulique selon l'une des revendications 1 à 3, avec
un premier et/ou second élargissement (800, 900) sur la première et/ou troisième section (100, 300).
